# EUROPEAN PATENT APPLICATION

(11) **EP 0 739 134 A2**
(43) Date of publication of application: **23.10.1996**
(21) Application number: 96106212.2
(22) Date of filing: 19.04.1996
(51) Int. Cl.: H04N 5/775

(54) **An immediate recording device and a method for recording immediately broadcasting signal in a video cassette recorder**

(30) Priority: 21.04.1995 KR 9509423
(71) Applicant: LG ELECTRONICS INC., Seoul (KR)
(72) Inventor: Kim, Jeung Soo, Songtan-Shi, Kyungki-Do (KR); Yoo, Hyung Jun, Seoul (KR); Lee, Myun Woo, Seoul (KR)
(74) Representative: Draudt, Axel Hermann Christian, Dipl.-Ing.

(57) **Abstract**

The immediate recording device of a VCR comprises a synchronous separator (31) for separating a synchronous signal from signal inputted from a television set, a teletext decoder (32) detecting broadcasting source from the signal, a microcomputer (33) recognizing channel of the TV set and outputting tuning data, a tuner (34) adjusting channel of the VCR to the channel of the TV set by the tuning data inputted from the microcomputer (33), and a recording unit for recording TV program of the channel of the TV set.

## Description

### BACKGROUND OF THE INVENTION

The present invention relates to a video cassette recorder (VCR), and more particularly to an immediate recording device and a method for recording broadcasting signal tuned by a toner of the VCR immediately and easily.

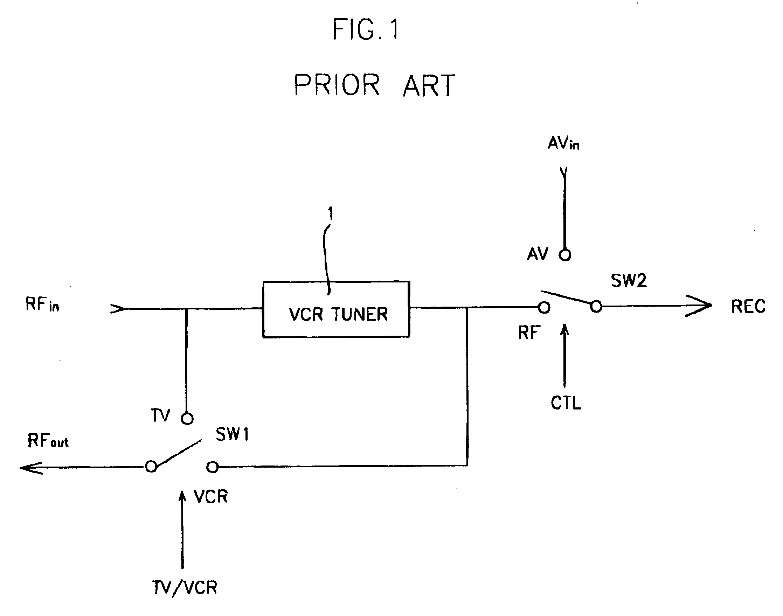

FIG. 1 is an input signal converting circuit of the conventional VCR.

Generally, there are two method how to record the broadcasting signal in the VCR. First, the broadcasting signal received through an antenna is directly recorded in the VCR. In this method, when the ling/broadcasting signal selecting switch SW₂ is converted into a broadcasting signal input terminal RF and a tuner 1 of the VCR is controlled to select the desired channel, the broadcasting signal is sent to and recorded in a recording unit through the line/broadcasting signal selecting switch SW₂. Second, the line input signal which is inputted from the TV is recorded in the VCR. In this method, when the line/broadcasting signal selecting switch SW₂ is converted into line signal input terminal AV, the line input signal AVᵢₙ is recorded in the recording unit through the line/broadcasting signal selecting switch SW₂.

In order to watch television(TV) set program different from TV program which is recording in the VCR, when the TV/VCR converting switch SW₁ in the VCR is converted into a TV mode, the broadcasting signal RFᵢₙ is directly inputted to the TV set through the VCR. Thus, the user can watch the desired channel while the broadcasting signal of the different channel is recording.

In the conventional recording device, however, the VCR must be turned on, the channel of the VCR must be selected to the channel in which the broadcasting signal is recording, and then a recording button is operated to record the TV program that the user is watching, in case where the VCR is off state. Therefore, this VCR which the conventional recording device is mounted into is inconvenient.

### SUMMARY OF THE INVENTION

It is an object of the present invention to provide in recording device in video cassette recorder in which the broadcasting signal can be recorded immediately and easily.

It is an other object of the present invention to provide a method for recording immediately a broadcasting signal in video cassette recorder in which the receiving channel of the VCR is adjusted with the receiving channel of the TV set using the broadcasting source carried on the vertical blanking interval of the visual signal.

It is a further object of the present invention to provide a method for recording immediately a broadcasting signal in video cassette recorder in which the broadcasting receiving channel is adjusted by comparing the broadcasting signal inputted from the TV set with the broadcasting signal inputted from the tuner of the VCR to coincide the receiving channel.

In order to achieve this object, the present invention comprises a synchronous separator which detects a visual signal and separates a synchronous signal from the visual signal, a teletext decoder detecting broadcasting source from the visual signal, a microcomputer for outputting a tuning data and controlling the deck system of the VCR, a tuner for tuning broadcasting signal by the tuning data, and a luminance/color signal processing unit for processing the visual signal inputted from the tuner.

Further, the present invention comprises a tuner for tuning the broadcasting signal, a visual/audio signal separating unit separating the tuned signal into the visual and audio signals, a comparator which compares the audio signal inputted from the visual/audio signal separating unit with audio signal inputted from the TV set and then outputs a comparison-judgement signal, a microcomputer for outputting a tuning data and controlling the tuner, and a luminance/color signal processing unit for processing visual signal.

### BRIEF DESCRIPTION OF THE INVENTION

FIG. 1 is a input signal converting circuit of the conventional VCR.
FIG. 2 is a signal line circuit connecting the TV set to the VCR according to the present invention.
FIG. 3 is a block diagram of the immediate recording device of the VCR according to the first embodiment of the present invention.
FIG. 4 is a block diagram of the immediate recording device of the VCR according to the second embodiment of the present invention.
FIG. 5 is a circuit of the comparator of FIG.4
FIG.6 is a flow chart according to the present invention.

### DETAILED DESCRIPTION OF THE INVENTION

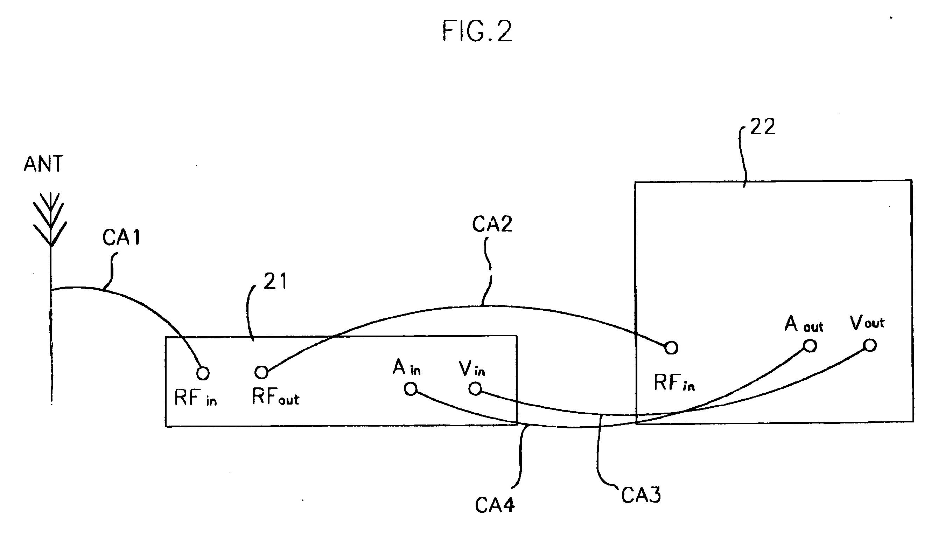

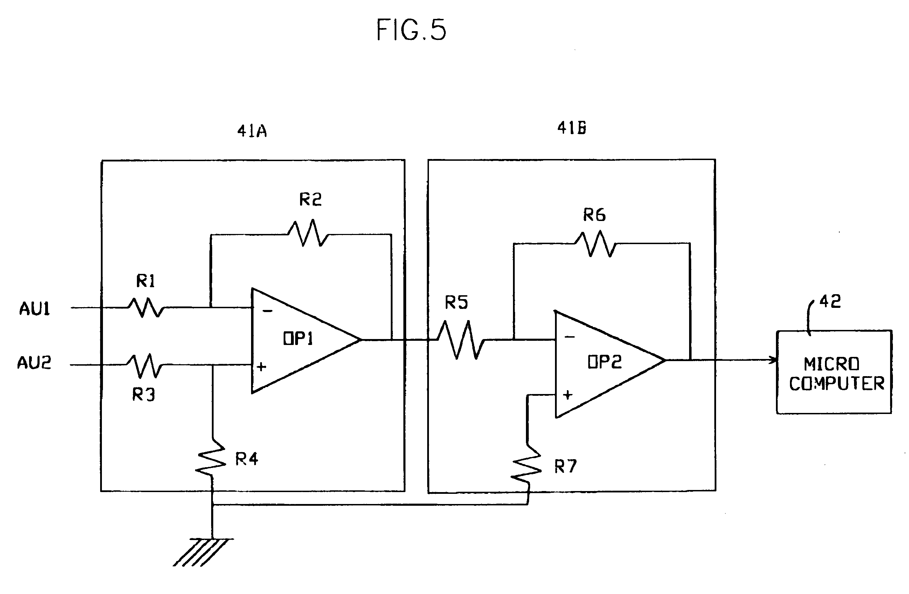

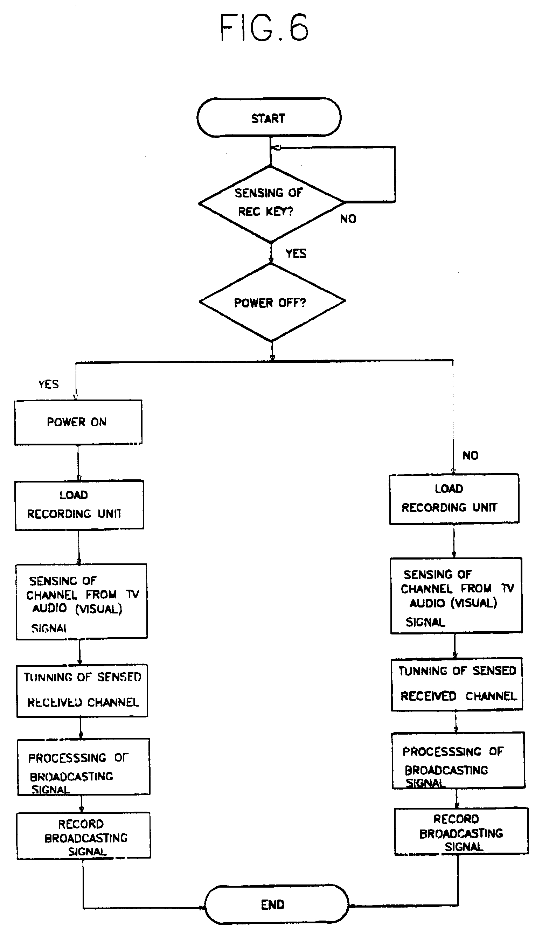

Hereinafter, the immediate recording device of the VCR according to the present invention is described in detail with FIG. 2 - FIG. 6.

Referring to FIG. 2, the broadcasting signal inputted through the antenna is sent to broadcasting signal inputted terminal RFᵢₙ of the VCR through a cable CA₁ and the broadcasting signal outputted from the broadcasting output terminal RFₒᵤₜ of the VCR is sent to the broadcasting input terminal RFᵢₙ of the TV set through the cable CA₂. The TV set and the VCR are inter-connected so that the visual and audio line signals outputted from the line signal output terminals Vₒᵤₜ,Aₒᵤₜ of the TV set are sent to the visual and audio line signal input terminals V_{in,}Aᵢₙ of the VCR 21 through the cable CA₁,CA₄.

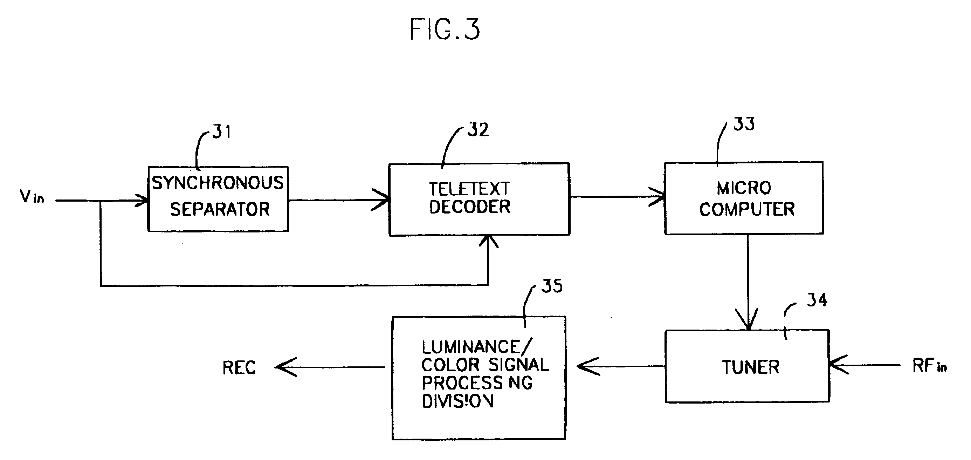

FIG. 3 is a block diagram of the first embodiment according to the present invention. A synchronous separator 31 detects the visual signal which is inputted to the visual line signal input terminal Vᵢₙ by recognizing the operation of the recording key and separates the synchronous signal from the detected visual signal. A teletext decoder 32 detects the broadcasting source from the visual signal in accordance with the timing of the synchronous separator 31. Recognizing the selected channel of the TV set 22 by the detected broadcasting source, the microcomputer 33 outputs the tuning data and controls the deck system or the VCR to record the broadcasting signal. The tuner 34 selects the channel corresponding to that of the VCR from the broadcasting signal RFᵢₙ inputted through antenna by the tuning data inputted from the microcomputer 33 and a luminance/color signal processing unit 35 processes luminance and color signal of the intermediate frequency signal inputted from the tuner 34.

As shown in FIG. 2, the broadcasting signal inputted through the antenna is sent to the broadcasting signal input terminal RFᵢₙ of the VCR 21 through the cable CA₁ and then sent the TV set 22 through the output terminal RFₒᵤₜ and the cable CA₂.

In this TV set 22 and VCR 21, when the VCR is turned off, the user can watch the TV program by operating the remote controller or the power key and the channel key attached the TV set 22. When the recording key is operated to record the TV program immediately during watching the TV program, the microcomputer 33 recognizes the operation of the recording key. At that time, the broadcasting signal of the selected channel of the TV set 22 is sent to the line signal input terminal Vᵢₙ,Aᵢₙ of the VCR from the line signal output terminal Vₒᵤₜ,Aₒᵤₜ of the TV set through the cable CA₃,CA₄.

The broadcasting signal sent to the line signal input terminal Vᵢₙ,Aᵢₙ, of which the synchronous signal is separated by the synchronous separator 31, is sent to the teletext decoder 32. In this teletext decoder 32, the broadcasting source which is carried on the vertical blanking interval is detected and inputted to the microcomputer 33.

In general, the broadcasting source carried on the visual signal includes various broadcasting data. The broadcasting data is represented on a display of the TV set. This broadcasting system is called korean broadcasting program system(KBPS) in Korea, video program system(VPS) in Europe.

The microcomputer 33 recognizes the selected channel of the TV set by the broadcasting source and outputs the tuning data to the tuner 34 of the VCR 21 to adjust the channel of the VCR 21 to the selected channel of the TV set. Further, the broadcasting signal selected by the tuner 34 is processed in the appropriate form that the luminance and color signal can be easily recorded by the luminance/color signal processing unit 35 and then sent to the recording unit. At the same time, the microcomputer 33 controls the deck system so that the broadcasting signal is recorded to a recording media such as a magnetic tape through a head of the VCR 21. In this embodiment, the process of the audio signal is the same of the conventional process.

In the aforementioned embodiment, the TV program that the user is watching is immediately recorded to the recording media of the VCR and the signal is processed faster than the loading time of the cassette tape in the deck system. Thus, when the recording order is inputted, the broadcasting signal is simultaneously recorded with loading of the tape.

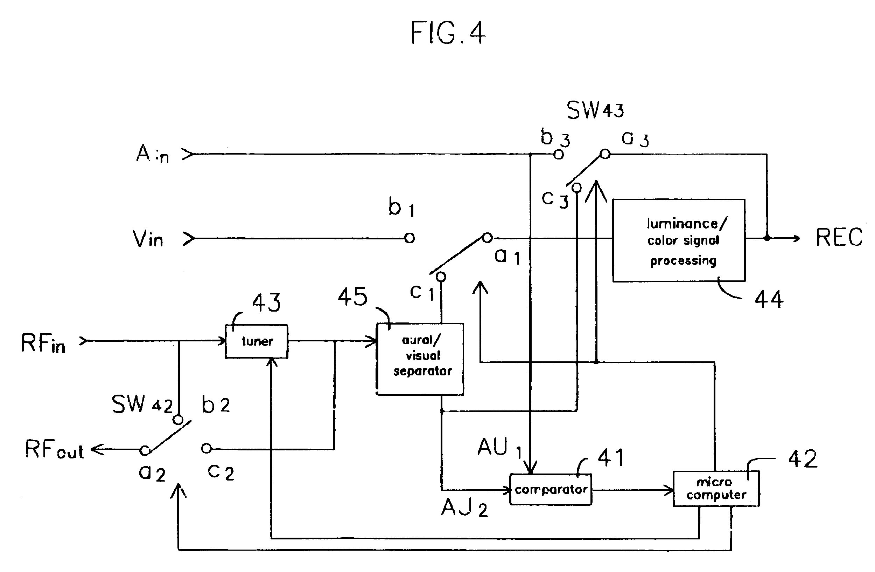

FIG. 4 is a block diagram of the immediate recording device in the VCR of the second embodiment according to the present invention. The broadcasting signal inputted from the tuner 43 of the VCR 21 are compared with the broadcasting signal inputted from the TV set in the comparator 41, and comparison-judgement signal is outputted from the separator 41 and sent to the microcomputer 42. The signal inputted from the tuner 43 is separated into visual signal and audio signal in a visual/audio separation unit 45. The microcomputer 42 controls the tuner 43 in which the broadcasting signal inputted from antenna is tuned and the deck system by the comparison-judgement signal to adjust the channel of the VCR to the channel of the TV set. The switch SW₄₁ selects one signal from the broadcasting signals inputted from the TV set and the tuner 43, and the processing unit 44 processes the visual signal in the appropriate form that the luminance and color signals can be easily recorded to the recording media. The switch SW₄₂ selects one signal from the broadcasting signals inputted through the antenna and the tuner 43, and sends the selected one signal to the TV set.

As shown in FIG. 4, when the recording key of the remote controller is operated to record the TV program immediately during watching the TV set, the broadcasting signal of the selected channel of the TV set is sent to the line signal input terminal Vᵢₙ,Aᵢₙ of the VCR from the line signal output terminal Vₒᵤₜ,Aₒᵤₜ of the TV set 22 through the cable CA₃,CA₄. Therefore, the microcomputer 42 outputs the switch controlling signal to the switches SW₄₁,SW₄₂ so that the switches are converted to fixed terminals b₁,b₂.

At that time, the audio signal AU₁, inputted to the line signal input terminal Aᵢₙ is sent to one terminal of the comparator 41, while the audio signal AU₂ of the channel selected by the tuner 43 of the VCR 21 is sent to other terminal of the comparator 41. When two audio signals inputted to the comparator 41 have different wavelength each other, high signal is outputted from the different amplifier 41A and sent to the microcomputer 42 through the hysteresis amplifier 41B.

The microcomputer 42 varies the tuning data inputted from the tuner 43 and compares the audio signal AU₂ of the selected channel with the audio signal AU₁. Repeating the tuning and the comparing process, when the audio signal AU₂ coincides with the audio signal AU₁, that is, the channel selected by the tuner 43 of the VCR 21 coincides with the channel selected by the tuner of the TV set, the low signal is sent to the microcomputer 42 from the comparator 41.

According to low signal inputted to the microcomputer 42, the operation of the tuner 43 is stoped by the microcomputer 42 and the switch controlling signal is sent to the switch SW₄₁ to convert the moving terminal a₁ into the fixed terminal c₁, so that the broadcasting signal outputted from the tuner 43 is sent to the recording unit through the switch SW₄₁ and the luminance/color signal processing unit 44.

At that time, because the TV set is set the TV mode, i.e, the moving terminal a₂ of the switch SW₄₂ is converted into the fixed terminal b₂, the channel different from the channel in which the TV program is recording can be selected.

In the above mentioned immediate recording device of the VCR, since the microcomputer of the VCR detects the broadcasting signal of the channel selected in the TV set by detecting the broadcasting source and comparing with the received broadcasting signal, and operates the deck system of the VCR to record the broadcasting signal of selected channel, the desired TV program can be recorded easily and immediately. In addition, since the channel of the TV set different from the channel that the TV program is recording in the VCR can be selected, the user can watch the other TV program while the TV program is recording.

While the preferred embodiment of the present invention has been described, it is to be understood that modifications will be apparent to those skilled in the art without departing from the spirit of the invention.

The scope of the invention, therefore, is to be determined solely by the following claims.

## Claims

1. An immediate recording device of a video cassette recorder, comprising:
a synchronous separator for separating a synchronous signal from signal inputted from a television set;
a teletext decoder detecting broadcasting source from the signal;
a microcomputer recognizing channel of the TV set and outputting tuning data;
a tuner adjusting channel of said VCR to the channel of said TV set by said tuning data inputted from said microcomputer; and
a recording unit for recording TV program of said channel of said TV set, said channel of said TV set being adjusted to said channel of said VCR.

2. An immediate recording device of a video cassette recorder according to claim 1, further comprising a luminance/color processing unit for processing said signal outputted from said tuner so that luminance signal and color signal become the appropriate form to be recorded.

3. An immediate recording device of a video cassette recorder according to claim 1, wherein said broadcasting source includes broadcasting data.

4. An immediate recording device of a video cassette recorder, comprising:
a tuner for tuning signal inputted through a antenna;
a comparator for comparing the signal inputted from said tuner with the signal inputted from a TV set and outputting comparison-judgement signal;
a microcomputer controlling said tuner by said comparison-judgement signal; and
a recording unit for recording the tuned signal.

5. An immediate recording device of a video cassette recorder according to claim 4, further comprising a switch selecting one signal from signals inputted from said tuner and said TV set, said switch being converted by switch controlling signal outputted from said microcomputer.

6. An immediate recording device of a video cassette recorder according to claim 4, further comprising a switch selecting one signal from signals inputted from said antenna and said tuner, said switch being converted by switch controlling signal outputted from said microcomputer.

7. An immediate recording device of a video cassette recorder according to claim 4, further comprising a visual/audio separating unit for separating visual and audio signal from the signal inputted from said tuner.

8. An immediate recording device of a video cassette recorder according to claim 4, further comprising a luminance/color processing unit for processing said signal inputted from said tuner or said TV set so that luminance signal and color signal become the appropriate form to be recorded.

9. An immediate recording device of a video cassette recorder according to claim 4, wherein said comparator comprises:
a difference amplifying unit for amplifying audio signals inputted from said TV set and said tuner; and
a hysteresis amplifying unit for amplifying signal outputted from said difference amplifying unit.

10. An immediate recording device of a video cassette recorder, comprising:
means for inputting signals outputted from the television;
means for recognizing a channel of a TV set;
a tuner for tuning signal so as to adjust a channel of said VCR to said channel of said TV set;
means for controlling said tuner; and
a recording unit for recording said signal tuned by said tuner; and

11. A method for recording immediately broadcasting signal in a video cassette recorder, comprising the steps of:
recognizing a channel of a TV set;
tuning signal so as to adjust said channel of said VCR to a channel of said TV set;
controlling a tuner by the recognized channel; and
recording the signal tuned by a tuner.

12. A method for recording immediately broadcasting signal in a video cassette recorder according to claim 11, further comprising the step of processing signal inputted from a tuner or said TV set so that luminance signal and color signal become the appropriate form to be recorded.

13. A method for recording immediately broadcasting signal in a video cassette recorder according to claim 11, wherein the recognizing step includes the steps of:
separating synchronous signal from signal inputted from said TV set; and
detecting broadcasting source so as to recognize said channel of said TV set.

14. A method for recording immediately broadcasting signal in a video cassette recorder according to claim 11, wherein the recognizing step includes the step of comparing signal inputted from a tuner of said VCR with signal inputted from said TV set.

15. A method for recording immediately broadcasting signal in a video cassette recorder according to claim 13, wherein said broadcasting source includes broadcasting data.
